# EUROPÄISCHE PATENTSCHRIFT

(11) **EP 1 409 929 B1**
(45) Veröffentlichungstag und Bekanntmachung des Hinweises auf die Patenterteilung: **23.11.2005**
(21) Anmeldenummer: 02753893.3
(22) Anmeldetag: 28.06.2002
(51) Int. Cl.: F24D 11/00

(54) **ANLAGE UND VERFAHREN ZUR VERSORGUNG VON VERBRAUCHERN MIT WÄRMEENEERGIE BZW. MIT KÄLTEENERGIE**
UNIT AND METHOD FOR SUPPLY OF USERS WITH HEAT ENERGY OR CHILLING ENERGY
INSTALLATION ET PROCEDE D'ALIMENTATION DE CONSOMMATEURS EN ENERGIE THERMIQUE OU ENERGIE FRIGORIFIQUE

(30) Priorität: 26.07.2001 AT 11682001
(43) Veröffentlichungstag der Anmeldung: 21.04.2004
(73) Patentinhaber: EnTech Energie Management GmbH, 6330 Kufstein (AT)
(72) Erfinder: SCHWARZ, Alois, A-6382 Kirchdorf (AT)
(74) Vertreter: Atzwanger, Richard
(86) Internationale Anmeldenummer: PCT/AT2002/000190
(87) Internationale Veröffentlichungsnummer: WO 2003/010469

(56) Entgegenhaltungen:
- EP-A- 0 002 839
- EP-A- 0 017 975
- CH-A- 636 948
- US-A- 4 254 636
- US-A- 5 788 149

## Beschreibung

Die gegenständliche Erfindung betrifft eine Anlage und ein Verfahren zur Versorgung von Verbrauchern mit Wärmeenergie bzw. mit Kälteenergie mittels eines Trägermediums mit mindestens einer Quelle für Wärmeenergie bzw. für Kälteenergie, deren Ausgangsleitung an den Eingang mindestens einer dieser zugeordneten, steuerbaren Verteilereinrichtung gelegt ist, welche mit einer Mehrzahl von Ausgängen ausgebildet ist, an welche die Vorlaufleitungen zu Verbrauchern an Wärmeenergie bzw. an Kälteenergie mit unterschiedlichen Temperaturniveaus angeschlossen sind, wobei durch die Verteilereinrichtung einer der Verbraucher auswählbar ist, welchem Trägermedium mit dem erforderlichen Temperaturniveau zuführbar ist.

Eine derartige Anlage ist aus der EP 0711958 B1 bekannt. Bei dieser bekannten Anlage sind die Verbraucher an Wärmeenergie bzw. an Kälteenergie mit unterschiedlichen Temperaturniveaus in Serie geschaltet. Hierdurch wird diejenige Wärmeenergie, welche von einem Verbraucher mit einem gegebenen Temperaturniveau nicht benötigt wird, jeweils an den nachgeschalteten Verbraucher mit einem niedrigeren Temperaturniveau weitergeleitet. Diejenige Wärmeenergie, welche von keinem der in Serie geschalteten Verbraucher mit unterschiedlichen Temperaturniveaus benötigt wird, wird schließlich an einen Wärmespeicher abgegeben, aus welchem die Wärmeenergie abgezogen und mittels einer Wärmepumpe wiederum auf ein solches Temperaturnievau angehoben wird, daß sie einem der Verbraucher mit einem hohen Temperaturniveau zugeführt werden kann.

Diese bekannte Anlage entspricht allerdings deshalb nicht vollständig den Erfordernissen, als diejenige Wärmeenergie mit einem gegebenen Temperaturniveau, welche im zugeordneten Verbraucher nicht unmittelbar benötigt wird, dem nachgeschalteten Verbraucher mit einem geringeren Temperaturnievau zugeführt wird. Da hierdurch die Temperatur dieser Wärmeenergie abgesenkt wird, steht sie in der Folge für die Verbraucher mit höheren Temperaturniveaus nicht mehr zur Verfügung.

Der gegenständlichen Erfindung liegt somit die Aufgabe zugrunde, eine derartige Anlage dahingehend weiterzuentwickeln, daß thermische Energie mit einem gegebenen Temperaturniveau, welche vom zugeordneten Verbraucher nicht unmittelbar benötigt wird, diesem auch zu einem späteren Zeitpunkt, nämlich, sobald sie erforderlich ist, zugeführt werden kann. Dies wird erfindungsgemäß dadurch erzielt, daß zumindest einem Teil der Verbraucher für Wärmeenergie mit unterschiedlichen Temperaturnieveaus jeweils mindestens ein Wärmespeicher parallel geschaltet ist, in welchem die überschüssige Wärmeenergie mit dem gegebenen Temperaturniveau speicherbar ist und aus welchen die in diesem enthaltene Wärmeenergie entnehmbar und dem Verbraucher mit dem betreffenden Temperaturniveau zuführbar ist.

Vorzugsweise sind in an sich bekannter Weise mehrere Verbraucher für Wärmeenergie mit unterschiedlichen Temperaturniveaus vorgesehen, wobei jedem dieser Verbraucher ein Wärmespeicher parallel geschaltet ist. Weiters ist vorzugsweise die Quelle für Kälteenergie in an sich bekannter Weise durch mindestens einen Umweltkollektor bzw. durch eine Wärmepumpe gebildet und ist dem mindestens einen Verbraucher für Kälteenergie gleichfalls ein Speicher für Kälteenergie zugeordnet.

Nach einer bevorzugten Ausführungsform sind zwischen den Vorlaufleitungen zur Einspeisung von Wärmeenergie und von Kälteenergie in die zugeordneten Verbraucher Sperrventile eingeschaltet. Hierdurch kann in die Anlage sowohl Wärmeenergie eingebracht und in dieser gespeichert werden als auch Kälteenergie den Verbrauchern zugeführt werden, um eine Klimatisierung zu bewirken. Vorzugsweise sind in die Vorlaufleitungen zur Einspeisung von Wärmeenergie und von Kälteenergie in Wände Umsteuerventile eingeschaltet, durch welche den Wänden Wärmeenergie von unten her und Kälteenergie von oben her zugeführt wird.

Nach einer weiters bevorzugten Ausführungsform sind zwischen den Rücklaufleitungen und den Vorlaufleitungen der hintereinander geschalteten Verbraucher für unterschiedliche Temperaturniveaus diese unmittelbar verbindende Leitungen vorgesehen und sind die Vorlaufleitung der Verteilereinrichtung an die Vorlaufleitung des Verbrauchers mit dem höchsten Temperaturniveau und die Rücklaufleitung der Verteilereinrichtung an die Rücklaufleitung des Verbrauchers mit dem niedrigsten Temperaturniveau anschließbar. Nach dem erfindungsgemäßen Verfahren wird diejenige von der Quelle für Wärmeenergie bzw. für Kälteenergie abgegebene thermische Energie, welche von den Verbrauchern nicht benötigt wird, an mindestens einen der den Verbrauchern mit unterschiedlichem Temperaturniveau parallel geschalteten thermischen Speicher abgegeben sowie in diesem gespeichert und wird im Falle des Bedarfes, insbesondere nach Abschaltung eines in der Anlage befindlichen Heizkessels bzw. der Wärmepumpe, thermische Energie aus dem Speicher entnommen und Verbrauchern zugeführt.

Eine erfindungsgemäße Anlage ist nachstehend anhand eines in der Zeichnung dargestellten Ausführungsbeispiels näher erläutert.

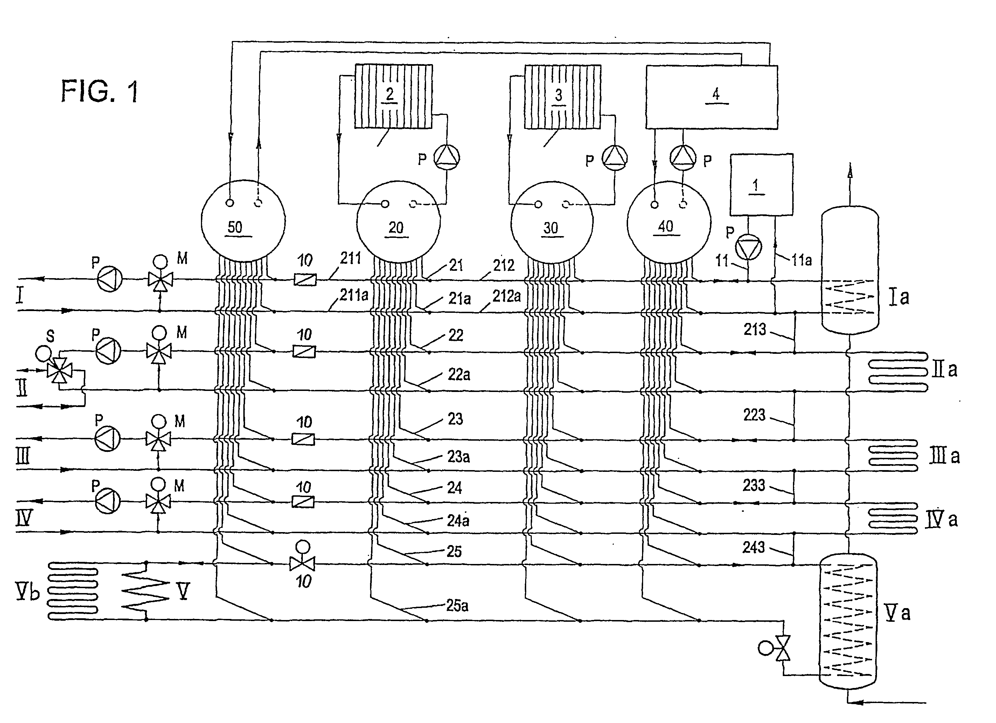

Die Fig.1 zeigt eine erfindungsgemäße Anlage in schematischer Darstellung.

Eine erfindungsgemäße Anlage enthält eine Mehrzahl von Vorrichtungen zur Abgabe von Wärmeenergie bzw. von Kälteenergie, nämlich einen Heizkessel 1, zwei Sonnen- bzw. Umweltkollektoren 2 und 3 und eine Wärmepumpe 4. Von diesen Vorrichtungen 1 bis 4 wird mittels eines Wärmeträgers Wärmeenergie bzw. Kälteenergie mit unterschiedlichen Temperaturniveaus abgegeben. Dabei wird vom Heizkessel 1 Wärmeenergie mit einer Temperatur im Bereich von 95°C bis 30°C abgegeben, wird von den Kollektoren 2 und 3 in Abhängigkeit von den klimatischen Verhältnissen Wärmeenergie bzw. Kälteenergie im Bereich von 100°C bis -40°C abgegeben und wird von der Wärmepumpe 4 Wärmeenergie bzw. Kälteenergie von 50°C bis -20°C abgegeben.

An die Erzeuger von Wärmeenergie bzw. von Kälteenergie sind mehrere Verbraucherkreise I bis V angeschlossen, welche unterschiedliche Temperaturniveaus benötigen. Es sind dies ein erster Heizungskreis I für eine Raumheizung, z.B. mittels Radiatoren, weiters ein zweiter Heizungskreis II für eine Innenwandheizung, weiters ein dritter Heizungskreis III für eine Fußbodenheizung, weiters ein vierter Heizungskreis IV für eine Außenwandheizung und schließlich eine Kühlanlage V und ein Kältespeicher Vb.

Der Heizkessel 1 ist über Leitungen 11 und 11a nur an den ersten Verbraucherkreis I für die Raumheizung angeschlossen. Demgegenüber sind die Kollektoren 2 und 3 sowie die Wärmepumpe 4 über Verteilereinrichtungen 20, 30, 40 und 50 an die Verbraucherkreise I bis V angeschlossen. So ist die Verteilereinrichtung 20 über eine Vorlaufleitung 21 und eine Rücklaufleitung 21a an den Verbraucherkreis I sowie über weitere Vorlaufleitungen 22 bis 25 und Rücklaufleitungen 22a bis 25a an die Verbraucherkreise II bis V angeschlossen. In gleicher Weise sind auch die Verteilereinrichtungen 30, 40 und 50 an die Verbraucherkreise I bis V angeschlossen.

Durch die Verteilereinrichtungen 20, 30, 40 und 50 wird die von den Wärmeerzeugern bzw. Kälteerzeugern zur Verfügung gestellte Wärmeenergie bzw. Kälteenergie mit unterschiedlichen Temperaturniveaus jeweils demjenigen der Verbraucherkreise I bis V zugeführt, in welchem das betreffende Temperaturniveau benötigt wird. Hierfür sind in den einzelnen Verbraucherkreisen Mischeinrichtungen M und Pumpen P vorgesehen.

Von den Verteilereinrichtungen 20, 30, 40 und 50 wird in Abhängigkeit davon, welche Temperatur das von der zugeordneten Wärmequelle bzw. Kältequelle abgegebene Trägermedium aufweist, dieses über eine der Vorlaufleitungen demjenigen der Verbraucherkreise zugeführt, welcher auf dieses Temperaturniveau abgestellt ist. Mittels der im betreffenden Verbraucherkreis vorgesehenen Pumpe P wird das Trägermedium über einen Mischer M dem in diesem Kreis befindlichen mindestens einen Verbraucher zugeführt. Der Rücklauf von diesem Verbraucher ist einerseits an den Mischer angeschlossen und erfolgt andererseits über die zugeordnete Rücklaufleitung, über welche das abgekühlte Trägermedium weitergeleitet wird.

Soferne in einer derartigen Anlage die einem der Verbraucherkreise zugeführte Wärmeenergie mit dem entsprechenden Temperaturniveau nicht benötigt wird, wird sie jedoch nicht an den nachgeschalteten Verbraucherkreis mit einem niedrigeren Temperaturniveau weitergeleitet, sondern wird sie vielmehr mit diesem Temperaturniveau gespeichert. Hierfür ist an die Verteilereinrichtungen 20, 30 und 40 parallel zu den Verbraucherkreisen I bis V zumindest eine Speichereinrichtung Ia bis Va angeschlossen, in welcher derjenige Anteil an Wärmeenergie bzw. an Kälteenergie, welcher im zugeordneten Verbraucherkreis I bis V nicht benötigt wird, gespeichert wird. Sobald von einer der Verteilereinrichtungen dem betreffenden Verbraucherkreis Wärmeenergie mit dem erforderlichen Temperaturniveau deshalb nicht mehr zugeführt wird, da sie von der zugeordneten Wärmequelle nicht zur Verfügung gestellt wird, wird die betreffende Vorlaufleitung geschlossen und fördert die in diesem Verbraucherkreis befindliche Pumpe P erwärmtes Trägermedium aus dem zugeordneten Speicher zu. Demnach wird die für diesen Verbraucher erforderliche Wärmeenergie mit dem gegebenen Temperaturniveau aus dem diesem Verbraucherkreis zugeordneten Speicher entnommen. Gleiches gilt auch für die Kälteenergie.

Wie dies aus der Zeichnung ersichtlich ist, ist der Heizungskessel 1 über die Leitungen 11 und 11a nur an den Heizungskreis I und an einen Boiler Ia für Warmwasser angeschlossen. Die Versorgung des Heizungskreises I erfolgt von den Kollektoren 2 bzw. 3 und allenfalls von der Wärmepumpe 4 her, soferne diese Wärmeenergie mit dem erforderlichen Temperaturniveau abgeben. Hierbei auftretende überschüssige Wärmeenergie wird im Boiler Ia gespeichert. Soferne von den Kollektoren 2 und 3 die erforderliche Wärmeenergie nicht zur Verfügung gestellt wird, wird diese aus dem Heizungskessel 1 bezogen. Von diesem abgegebene Wärmeenergie wird gleichfalls im Boiler Ia gespeichert. Sobald der Heizungskessel 1 abgeschaltet wurde und in diesem Verbraucherkreis weiterhin Wärmeenergie benötigt wird, wird diese aus dem Boiler Ia abgezogen. Hierdurch wird eine maßgebliche Herabsetzung der Anzahl der Ein- und Ausschaltungen des Heizungskessels 1 erzielt, wodurch den diesbezüglichen Forderungen auf Auflagen in Bezug auf den Umweltschutz entsprochen wird.

Nachstehend ist die Funktion der Anlage unter Bezug auf den Umweltkollektor 2 und die diesem nachgeschalteten Einrichtungen erläutert:
Das vom Kollektor 2 abgegebene Trägermedium wird von der Verteilereinrichtung 20 in Abhängigkeit von dessen Temperatur über die Vorlaufleitungen 21 bis 25 einem der Verbraucherkreise I bis V zugeleitet. Beispielsweise wird von der Verteilereinrichtung 20 über die Vorlaufleitung 21 Trägermedium mit einer Temperatur von etwa 70° an die Vorlaufleitungen 211 und 212 des ersten Verbraucherkreises I abgegeben. Über die Vorlaufleitung 211 gelangt das Trägermedium in den Verbraucherkreis I mit Raumheizgeräten und über die Leitung 212 gelangt es in den Speicher Ia. Der Rückfluß des abgekühlten Trägermediums kann über die Leitungen 211a und 212a zur Rücklaufleitung 21a und zur Verteilereinrichtung 20 erfolgen.

Sobald jedoch von der Verteilereinrichtung 20 in den Verbraucherkreis I kein Zufluß mehr erfolgt, wird die erforderliche Wärmeenergie aus dem Speicher Ia über die Leitungen 212 und 211 dem Verbraucherkreis I zugeführt. Somit wird der Verbraucherkreis I vom Boiler Ia her mit Wärmeenergie versorgt. In analoger Weise werden dem Verbraucherkreis II bzw. dem diesen zugeordneten Speicher IIa Wärmeenergie mit einer Temperatur von etwa 40°C, dem Verbraucherkreis III und dem Speicher IIIa Wärmeenergie mit einer Temperatur von etwa 30°C, dem Verbraucherkreis IV und dem Speicher IVa Wärmeenergie mit einer Temperatur von etwa 20°C und dem Verbraucherkreis V mit dem Boiler Va thermische Energie mit einer Temperatur von etwa 12°C zugeführt.

Für den Fall, daß demgegenüber im Verbraucherkreis I ebenso wie im Verbraucher Ia keine Wärmeenergie mehr benötigt wird, kann die Verteilereinrichtung 20 so verstellt werden, daß zwar der Vorlauf über die Leitung 21 erfolgt, wobei das Trägermedium den Boiler Ia durchsetzt, daß jedoch der Rücklauf über die Leitung 25a erfolgt. Um dies zu ermöglichen, ist die Leitung 212a über eine Verbindungsleitung 213 mit der Vorlaufleitung des Verbraucherkreises II verbunden und sind auch die weiteren Verbraucherkreise III, IV und V über die Leitungen 223, 233 und 243 miteinander verbunden. Hierdurch gelangt das Trägermedium durch sämtliche Verbraucherkreise I bis V hindurch, wobei es die in ihm enthaltene Wärmeenergie an die Verbraucher bzw. an die Speicher mit jeweils niedrigerem Temperaturniveau abgibt. Da es derart über die Rücklaufleitung 25a mit einer sehr niedrigen Temperatur wieder zu den Kollektoren 2 und 3 zurückgeführt wird, wird hierdurch in diesen ein sehr hoher Wirkungsgrad erzielt.

In analoger Weise erfolgt auch die Speisung der Verbraucherkreise II bis IV sowie der Speicher IIa bis IVa vom Umweltkollektor 3 bzw. von der Wärmepumpe 4 über die Verteilereinrichtungen 30 und 40. Für den Fall, daß in einem der Verbraucherkreise bzw. einem der zugeordneten Speicher Wärmeenergie mit dem diesen Verbraucherkreisen bzw. Speichern entsprechenden Temperaturniveaus nicht benötigt wird, sind auch die Verbraucherkreise II bis V miteinander über die Leitungen 223, 233 und 243 miteinander verbunden.

Von den Umweltkollektoren 20 und 30 sowie von der Wärmepumpe 4 kann auch Kälteenergie abgegeben werden. Durch die Verteilereinrichtungen 20, 30, 40 und 50 wird die Kälteenergie über die Vorlaufieitungen in den Kühlraum V bzw. in den Kältespeicher Vb geleitet und in diesem gespeichert. Die im Kältespeicher Vb gespeicherte und auch die von der Wärmepumpe 4 abgegebene Kälteenergie kann über die Verteilereinrichtung 50 an einen der Verbraucherkreise I bis IV abgegeben werden, wobei sie zur Abkühlung der Räume, der Innenwände bzw. Fußböden dient. In den Verbraucherkreisen I bis IV sind hierfür Sperrventile 10 angeordnet, durch welche im Fall, daß eine Klimatisierung erfolgt, die Verbraucherkreise I bis V jeweils in zwei Bereiche getrennt werden, wodurch gleichzeitig in den Verbraucherkreisen I bis IV eine Kühlung und in den Speichern Ia und Va eine Speicherung von Wärmeenergie erfolgen kann.

Da die Speisung einer Wandheizung mit Wärmeenergie so erfolgen muß, daß die Wärmeenergie dem unteren Ende der Wand zugeführt wird, wogegen eine Kühlung derart erfolgen muß, daß die Kälteenergie dem oberen Ende der Wand zugeführt wird, ist zudem im Verbraucherkreis II ein Steuerventil S vorgesehen, durch welche die hierfür erforderliche Steuerung erfolgt.

Soferne die Verteilereinrichtungen 20 und 30 entsprechend gesteuert werden, kann durch diese auch aus den Verbraucherkreisen I bis V erwärmtes Trägermedium über die Vorlaufleitungen 21, 22, 23 und 24 durch die Kollektoren 2 und 3 hindurchgeleitet werden, um diese von Schnee oder Eis zu befreien.

Soferne dem Verbraucherkreis V Wärmeenergie zugeführt wird, wird diese in den Boiler Va eingeleitet, in welchem Wasser erwärmt wird, welches in der Folge in den Boiler Ia geleitet wird, aus welchem erwärmtes Brauchwasser entnommen werden kann.

Durch die Verteilereinrichtung 50 kann aus einem der Verbraucherkreise II bis V Wärmeenergie entnommen werden, welche der Wärmepumpe 4 zugeführt wird. Die in der Wärmepumpe 4 erzeugte Wärmeenergie kann über die Verteilereinrichtung 40 einem der Verbraucherkreise I bis V zugeführt werden. Zudem kann die von der Wärmepumpe 4 erzeugte Kälteenergie über die Verteilereinrichtung 50 einem der Verbraucherkreise I bis V zugeführt werden.

## Patentansprüche

1. Anlage zur Versorgung von Verbrauchern (I bis V) mit Wärmeenergie bzw. mit Kälteenergie mittels eines Trägermediums mit mindestens einer Quelle (1 bis 4) für Wärmeenergie bzw. für Kälteenergie, deren Ausgangsleitung an den Eingang mindestens einer dieser zugeordneten, steuerbaren Verteilereinrichtung (20, 30, 40, 50) gelegt ist, welche mit einer Mehrzahl von Ausgängen ausgebildet ist, an welche die Vorlaufleitungen zu Verbrauchern (I bis V) an Wärme bzw. an Kälte mit unterschiedlichen Temperaturniveaus angeschlossen sind, wobei durch die Verteilereinrichtung (20, 30, 40, 50) einer der Verbraucher (I bis V) auswählbar ist, welchem Trägermedium mit dem erforderlichen Temperaturniveau zuführbar ist, **dadurch gekennzeichnet, daß** zumindest einem Teil der Verbraucher (I bis V) für Wärmeenergie mit unterschiedlichen Temperaturniveaus jeweils mindestens ein Wärmespeicher (Ia bis Va) parallel geschaltet ist, in welchem die überschüssige Wärmeenergie mit dem gegebenen Temperaturniveau speicherbar ist und aus welchem die in diesen enthaltene Wärmeenergie entnehmbar und den Verbrauchern mit dem betreffenden Temperaturniveau zuführbar ist.

2. Anlage nach Patentanspruch 1, **dadurch gekennzeichnet, daß** in an sich bekannter Weise mehrere Verbraucher für Wärmeenergie mit unterschiedlichen Temperaturniveaus vorgesehen sind, wobei jedem dieser Verbraucherkreise (I bis V) ein Wärmespeicher (Ia bis Va) parallel geschaltet ist.

3. Anlage nach einem der Patentansprüche 1 und 2, **dadurch gekennzeichnet, daß** die Quelle für Kälteenergie in an sich bekannter Weise durch mindestens einen Umweltkollektor (2, 3) bzw. durch eine Wärmepumpe (4) gebildet ist und daß dem mindestens einen Verbraucher (V) für Kälteenergie gleichfalls ein Speicher (Vb) für Kälteenergie zugeordnet ist.

4. Anlage nach einem der Patentansprüche 1 bis 3, **dadurch gekennzeichnet, daß** zwischen den Vorlaufleitungen zur Einspeisung von Wärmeenergie und von Kälteenergie in die zugeordneten Verbraucher Sperrventile (10) eingeschaltet sind.

5. Anlage nach einem der Patentansprüche 1 bis 4, **dadurch gekennzeichnet, daß** in die Vorlaufleitungen zur Einspeisung von Wärmeenergie und von Kälteenergie in Wände Umsteuerventile (S) eingeschaltet sind, durch welche die Wärmeenergie in die Wände von unten her und von Kälteenergie von oben her erfolgt.

6. Anlage nach einem der Patentansprüche 1 bis 5, **dadurch gekennzeichnet, daß** zwischen den Rücklaufleitungen und den Vorlaufleitungen der hintereinander geschalteten Verbraucherkreise (I bis V) diese unmittelbar verbindende Leitungen (213, 223, 233, 243) vorgesehen sind, wobei die Vorlaufleitung (21) der Verteilereinrichtung (20, 30, 40, 50) an die Vorlaufleitung des Verbraucherkreises (I) mit dem höchsten Temperaturniveau und die Rücklaufleitung der Verteilereinrichtung (20, 30, 40, 50) an die Rücklaufleitung (25a) des Verbraucherkreises (V) mit dem niedrigsten Temperaturniveau anschließbar sind.

7. Verfahren zum Betrieb einer Anlage zur Versorgung von Verbrauchern (I bis V) mit Wärmeenergie bzw. mit Kälteenergie gemäß einem der Patentansprüche 1 bis 6, **dadurch gekennzeichnet, daß** diejenige von der Quelle (1, 2, 3, 4) für Wärmeenergie bzw. für Kälteenergie abgegebene thermische Energie, welche von den Verbrauchern nicht benötigt wird, an mindestens einen der den Verbrauchern mit unterschiedlichem Temperaturniveau parallel geschalteten thermischen Speicher abgegeben sowie in diesem gespeichert wird und daß diese thermische Energie im Falle des Bedarfes, insbesondere nach Abschaltung des in der Anlage befindlichen Heizkessels bzw. der Wärmepumpe, aus dem thermischen Speicher entnommen und den Verbrauchern zugeführt wird.

## Claims

1. An installation for supplying consumer units (I to V) with heat energy or with cooling energy by means of a transfer medium, having at least one source (1 to 4) for heat energy or for cooling energy whose output line is applied to the input of at least one controllable distributor device (20, 30, 40, 50) assigned thereto and which is designed with a plurality of outputs to which the forward-flow lines to units (I to V) consuming heat or cold at different temperature levels are connected, it being possible for the distributor device (20, 30, 40, 50) to select one of the consumer units to which transfer medium at the required temperature level may be supplied, **characterised in that** at least one heat reservoir (Ia to Va) is connected in parallel in each case with at least some of the units (I to V) consuming heat energy at different temperature levels, it being possible for the excess heat energy to be stored in said heat reservoir at the given temperature level and for the heat energy contained therein to be drawn from it and supplied to the consumer units at the relevant temperature level.

2. An installation according to claim 1, **characterised in that** a plurality of units consuming heat energy at different temperature levels are provided in a manner known per se, a heat reservoir (Ia to Va) being connected in parallel with each of these consumer units (I to V).

3. An installation according to either one of claims 1 and 2, **characterised in that** the source for cooling energy takes the form in a manner known per se of at least one environmental collector (2, 3) or of a heat pump (4), and **in that** a reservoir (Vb) for cooling energy is likewise assigned to the at least one unit consuming cooling energy (V).

4. An installation according to any one of claims 1 to 3, **characterised in that** shut-off valves (10) are connected between the forward-flow lines for feeding heat energy and cooling energy into the associated consumer units.

5. An installation according to any one of claims 1 to 4, **characterised in that** reversing valves (S) are connected into the forward-flow lines for feeding heat energy and cooling energy into walls, said reversing valves being used to supply the walls with heat energy from below and cooling energy from above.

6. An installation according to any one of claims 1 to 5, **characterised in that** lines (213, 223, 233, 243) directly connecting the consumer circuits (I to V) connected in series are provided between the return lines and the forward-flow lines of said consumer circuits, wherein the forward-flow line (21) of the distributor device (20, 30, 40, 50) may be connected to the forward-flow line of the consumer circuit (I) having the highest temperature level and the return line of the distributor device (20, 30, 40, 50) may be connected to the return line (25a) of the consumer circuit (V) having the lowest temperature level.

7. A method of operating an installation for supplying consumer units (I to V) with heat energy or cooling energy according to any one of claims 1 to 6, **characterised in that** the thermal energy which is output by the source (1, 2, 3, 4) for heat energy or for cooling energy and which is not required by the consumer units is output to at least one of the thermal reservoirs connected in parallel with the consumer units of different temperature level and is stored therein, and **in that**, if the need arises, in particular after the heating furnace located in the installation or the heat pump is switched off, this thermal energy is drawn from the thermal reservoir and supplied to the consumer units.

## Revendications

1. Installation pour alimenter des consommateurs (I à V) en énergie thermique ou frigorifique à l'aide d'un agent porteur, avec au moins une source (1 à 4) pour l'énergie thermique ou frigorifique dont la conduite de sortie est reliée à l'entrée d'au moins un distributeur (20, 30, 40, 50) associé à cette source, apte à être commandé et comportant plusieurs sorties auxquelles sont raccordées les canalisations montantes menant aux consommateurs (I à V) de chaleur ou de froid à niveaux de température différents, étant précisé que le distributeur (20, 30, 40, 50) permet de sélectionner l'un des consommateurs (I à V) auquel l'agent porteur est apte à être amené avec le niveau de température requis,
**caractérisée en ce qu'**il est prévu, monté en parallèle par rapport à une partie au moins des consommateurs (I à V) pour l'énergie thermique avec des niveaux de température différents, au moins un accumulateur de chaleur (Ia à Va) dans lequel l'énergie thermique excédentaire avec le niveau de température donné peut être stockée et dans lequel l'énergie thermique contenue peut être prise et amenée dans les consommateurs avec le niveau de température concerné.

2. Installation selon la revendication 1, **caractérisée en ce que** d'une manière connue en soi, plusieurs consommateurs pour l'énergie thermique avec des niveaux de température différents sont prévus, un accumulateur de chaleur (Ia à Va) étant monté en parallèle par rapport à chacun de ces circuits consommateurs (I à V).

3. Installation selon la revendication 1 ou 2, **caractérisée en ce que** la source pour l'énergie frigorifique est formée d'une manière connue en soi par au moins un capteur solaire (2, 3) ou par une pompe à chaleur (4) et **en ce qu'**un accumulateur (Vb) pour l'énergie frigorifique est également associé au(x) consommateur(s) pour l'énergie frigorifique.

4. Installation selon l'une des revendications 1 à 3, **caractérisée en ce que** des clapets anti-retour (10) sont intégrés dans les consommateurs associés, entre les canalisations montantes destinées à l'alimentation en énergie thermique et en énergie frigorifique.

5. Installation selon l'une des revendications 1 à 4, **caractérisée en ce qu'**il est prévu, intégrées dans les canalisations montantes destinées à l'alimentation en énergie thermique et en énergie frigorifique dans les murs, des soupapes de commande (S) grâce auxquelles l'énergie thermique est amenée dans les murs par le bas et l'énergie frigorifique par le haut.

6. Installation selon l'une des revendications 1 à 5, **caractérisée en ce qu'**il est prévu, entre les canalisations descendantes et les canalisations montantes des circuits consommateurs (I à V) montés les uns derrière les autres, des canalisations (213, 223, 233, 243) qui relient directement ceux-ci, la canalisation montante (21) du distributeur (20, 30, 40, 50) étant apte à être reliée à la canalisation montante du circuit consommateur (I) avec le niveau de température le plus haut tandis que la canalisation descendante du distributeur (20, 30, 40, 50) est apte à être reliée à la canalisation descendante (25a) du circuit consommateur (V) avec le niveau de température le plus bas.

7. Procédé pour mettre en oeuvre une installation d'alimentation de consommateurs (I à V) en énergie thermique ou frigorifique selon l'une des revendications 1 à 6, **caractérisé en ce que** l'énergie thermique qui est fournie par la source (1, 2, 3, 4) pour l'énergie thermique ou frigorifique et dont les consommateurs n'ont pas besoin est fournie à l'un au moins des accumulateurs thermiques qui sont montés en parallèle par rapport aux consommateurs avec un niveau de température différent et est stockée dans cet accumulateur, et **en ce que** cette énergie thermique, en cas de besoin et en particulier après l'arrêt de la chaudière qui se trouve dans l'installation ou de la pompe à chaleur, est prise dans l'accumulateur thermique et amenée dans les consommateurs.
